# EUROPEAN PATENT APPLICATION

(11) **EP 4 748 890 A1**
(43) Date of publication of application: **27.05.2026**
(21) Application number: 24214923.5
(22) Date of filing: 22.11.2024
(51) Int. Cl.: C08L 95/00

(54) **PAVING COMPOSITION INCLUDING HIGH RECYCLED BITUMINOUS MATERIAL CONTENT**

(71) Applicant: ArrMaz Products Inc., Mulberry, FL 33860 (US)
(72) Inventor: The designation of the inventor has not yet been filed
(74) Representative: Bandpay & Greuter

(57) **Abstract**

An asphalt additive may comprise at least an alkoxylate and a phosphate ester; and optionally a hydrocarbon amine. The asphalt additive may be used in an asphalt composition further comprising recycled bituminous material having better mechanical properties, enhanced rutting resistance, and improved sustainability by maximizing the use of recycled materials.

## Description

### Field of the Invention.

This invention relates generally to a paving composition, and more particularly, but not by way of limitation, to a paving composition that incorporates a high percentage of recycled bituminous material combined with an additive.

### Description of the Related Art

Asphalt mixture is a highly complex material composed of aggregates, asphalt composition (AKA asphalt binder), and air voids, each contributing to the overall microstructure. Prior research has demonstrated that the way load is transmitted within asphalt mixtures is heavily dependent on the interaction points between aggregates and binder. These interactions, particularly the mechanical and geometric characteristics of the aggregates and binder, are key determinants in the stress-strain distribution across the asphalt mixture. Studies further emphasized the importance of contact geometry factors like contact area, the number of contact zones, and their orientation, which play a critical role in how stress is distributed within the aggregate skeleton. These findings underscore that asphalt mixture performance, particularly its resistance to rutting, is not solely a function of density, but rather the internal structure of the aggregate framework.

Traditional methods have relied on density measurements to evaluate asphalt mixtures, often assuming that higher density correlates with better performance. However, evidence suggests that mixtures with identical densities can exhibit vastly different behaviors under load. This observation points to the fact that internal structure analysis, particularly focusing on aggregate contacts and stress paths, is a more accurate predictor of performance, especially in terms of rutting resistance.

In the compaction process, an initially thicker layer of asphalt mastic facilitates movement between aggregates. Asphalt mastic is a composite material consisting of the asphalt binder mixed with fine aggregate (mineral filler, sand, or both). As compaction progresses and stress increases, the mastic layer becomes thinner, which results in greater shearing resistance. This interaction between the binder and the aggregates becomes increasingly complex, particularly as temperatures change. Contrary to conventional assumptions that higher compaction temperatures inherently improve workability by reducing binder viscosity, research has shown that the relationship between temperature, density, and shear resistance is more nuanced. There is often a point where increasing temperature improves workability, but beyond a certain threshold, further increases lead to diminished compaction efficiency due to heightened shear resistance. This phenomenon, referred to as the "Tender Zone," presents a risk of over-compaction, which can adversely impact pavement durability.

While traditional compaction strategies focus on reaching a target density or air void content, such metrics do not fully capture the material's performance under actual service condition. The relationship between aggregates and the binder during compaction - essentially a packing process with asphalt mastic shearing - requires a deeper understanding of these factors to optimize asphalt performance.

Based on the foregoing, it is desirable to provide a paving composition that addresses these limitations by enhancing the integration of recycled bituminous materials into asphalt mixtures using a novel warm mix additive.

It is further desirable for the additive to alter the internal packing dynamics during compaction and production.

It is further desirable for the paving composition to significantly improve rutting resistance through better control of contact points, contact length, and orientation within the aggregate skeleton by optimizing how aggregates interact within the mix, providing more efficient load distribution, which is critical for long-term pavement performance.

It is further desirable for the paving composition to focus on increasing the utilization of recycled bituminous material that include Recycled Asphalt Pavement, also called Reclaimed Asphalt Pavement (RAP) and Recycled Asphalt Shingles (RAS) without sacrificing mechanical properties, improving workability and compaction at lower temperatures while also reducing the amount of fresh binder required.

It is further desirable for the paving composition to facilitate the efficient mixing and bonding of recycled materials, which is essential in modern, more sustainable asphalt production.

It is further desirable for the paving composition to enhance adhesion promotion and anti-stripping properties in asphalt mixtures, with the additive improving the binder-aggregate interaction and providing better mechanical performance and moisture resistance.

### Brief description

In general, in a first aspect, the invention relates to an asphalt additive comprising at least an alkoxylate, preferably the alkoxylate comprises at least one of ethylene oxide moieties, propylene oxide moieties, butylene oxide moieties and combinations thereof, more preferablythealkoxylate comprises a copolymer, preferably the copolymer comprises either a random or a block copolymer, more preferably the block copolymer comprises at least one of a diblock, triblock or tetrablock copolymer; and a phosphate ester preferably the phosphate ester comprises at least one hydrocarbon chain having at least a 4 carbon atoms, more preferably having more than about 6 carbon atoms, even more preferably more than about 7, more than about 8 carbon atoms, further preferably more than about 12 carbon atoms, even further preferably less than about 30 carbon atoms, preferably, the hydrocarbon chain has from 4 to 30 carbon atoms, more preferably from 6 to 20 carbon atoms, even more preferably from 8 to 20, and advantageously from 12 to 20 carbon atoms. The degree of alkoxylation of the alkoxylate may be from about 3 to about 100, preferably from about 4 to about 75, more preferably from about 4 to about 50. Examples of suitable degrees of alkoxylation may include about 30-70. In another preferred embodiment, the degree of alkoxylation of the alkoxylate is from, about 40 to 60, more preferably from about 45 to 55.

The alkoxylate may be of formula 1: [A-O-B-]_{d}Z (1)
wherein:
A is chosen from a hydrogen atom, a group G, a group 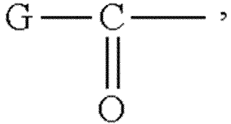
a group 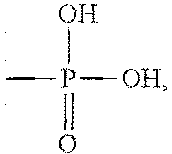 and a group 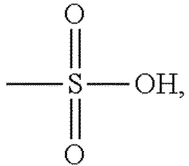
where G represents a linear or branched, saturated or unsaturated C₁-C₃₀ hydrocarbon-based chain optionally comprising at least one aromatic ring, and optionally substituted with at least one phosphate group, preferentially a single phosphate group,
B represents a divalent group containing at least one repeating unit of alkylene oxide type, d is equal to 1 or to 2, and
Z is chosen from a hydrogen atom, a radical of formula Z1 and a radical of formula Z2: 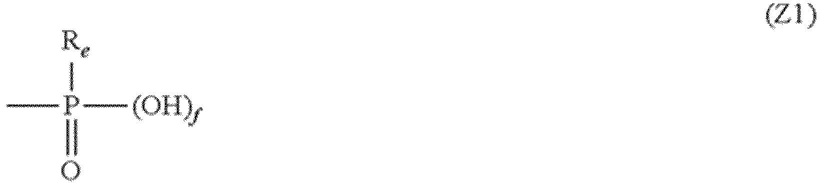 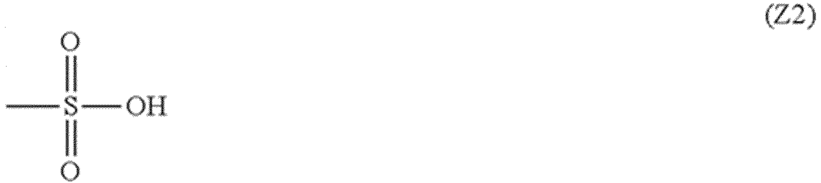
where R represents a hydrogen atom or a linear or branched C₁-C₆ alkyl group, f is equal to 0, 1 or 2,
e is equal to 0 or to 1, and d+e+f is equal to 3,
a group G, and a group 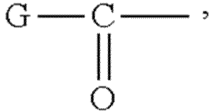
where G is as defined above,
it being understood that when d is equal to 1, then Z is chosen from a hydrogen atom, a radical of formula Z1, a radical of formula Z2, a group G, and a group 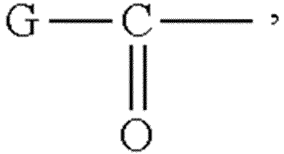
where G is as defined above,
and that when d is equal to 2, then Z represents Z1, e is equal to zero (0) and P is linked to two groups [A-O-B-] which may be identical or different, preferentially identical, as defined above. Preferably, A and Z each represent hydrogen.

The additive may comprise the alkoxylate in an amount of greater than 50 wt%, preferably greater than about 60 wt%, more preferably greater than about 70 wt%, and less than about 85 wt% based on the total weight of the additive, preferably, the additive comprises the alkoxylate from 50 to 85 wt%, more preferably from 60 to 85 wt%, and even more preferably from 65 to 85 wt% based on the total weight of the additive.

The phosphate ester may comprise one to three hydrocarbon chains derived from alcohols further to an esterification reaction.

The phosphate ester may comprise two hydrocarbon chains and optionally three hydrocarbon chains, preferably either or both of the 2^{nd} chain and the 3^{rd} chain when present, comprises at least a 4 carbon atom chain, more preferably the carbon chain having more than about 6 carbon atoms, even more preferably more than about 7 carbon atoms, even more preferably the carbon chain having more than about 8 carbon atoms, further preferably the carbon chain having more than about 12 carbon atoms, even further preferably the carbon chain having less than about 30 carbon atoms, and/or preferably wherein at least one of the 1^{st} chain, the 2^{nd} chain, the optional 3^{rd} chain and any combination thereof includes one or more alkoxylate moieties, more preferably up to about 100 alkoxylate units, still more preferably up to about 50 alkoxylate units, even more preferably up to about 20 alkoxylate units, further preferably the alkoxylate is chosen among ethylene oxide, propylene oxide, butylene oxide or a combination thereof.

The phosphate ester and the alkoxylate are different compounds. When the phosphate ester contains alkoxylate moieties, the phosphate ester is different from the alkoxylate according to the invention.

At least one hydrocarbon chain of the phosphate ester may comprise at least one or more branched groups, preferably each branched group comprises an aliphatic or cyclical moiety comprising at least one carbon atom up to about 13 carbon atoms, more preferably the aliphatic or cyclical moiety comprises at least one of an alkyl group, alkenyl group, alkynyl group and any combination thereof, still more preferably the branch group devoid of an aromatic group, even more preferably the at least one hydrocarbon chain comprising at least one branched group is derived from the esterification of one or more alcohols chosen from 2-octanol, 2-ethylhexanol, methyl heptanol, dimethyl hexanol, isononanol, dimethyl heptanol, isodécanol, dimethyl octanol, trimethyl heptanol, isoundecanol, dimethyl nonanol, trimethyl octanol, isododecanol, trimethyl nonanol, tetramethyl octanol, isotridécanol, trimethyl decanol, tetramethyl nonanol, 4-methyl-2-pentanol, further preferably at least one hydrocarbon chain comprising at least one of the branched group includes at least one hetero atom, wherein the hetero atom comprises at least one of O, S, P and combinations thereof and/or 1 or more hydroxyl groups.

The additive may comprise the phosphate ester in an amount of less than or equal 50 wt%, preferably less than about 45 wt%, more preferably less than about 40 wt%, and greater than about 10 wt%, preferably greater than about 15 wt%, more preferably greater than about 20 wt%, still more preferably greater than about 25 wt%, still more preferably at least about 30 wt% based on the total weight of the additive, preferably, the additive comprises the phosphate ester in an amount from 10 to 50 wt%, more preferably from 15 to 45 wt%, and even more preferably from 20 to 40 wt% based on the total weight of the additive.

The additive may have a weight ratio of phosphate ester / alkoxylate between no more than about 10:90 to about 50:50, preferably no more than about 15:85 to about 45:55, preferably no more than about 20:80 to about 40:60, a preferred range is no more than about 23:77 to about 38:62.

In a more preferred embodiment, the additive comprises an alkoxylate as described above and a phosphate ester comprising at least one hydrocarbon chain comprising at least one branched group, with a weight ratio of phosphate ester / alkoxylate between no more than 10:90 to 50:50, preferably no more than 15:85 to 45:55, preferably no more than 20:80 to 40:60, a preferred range is no more than 23:77 to 38:62.

In a preferred embodiment, the additive comprises an alkoxylate as described above and a phosphate ester comprising at least one hydrocarbon chain comprising at least one branched group having a carbon chain of 6 to 15 carbon atoms; with a weight ratio of phosphate ester / alkoxylate between no more than 10:90 to 50:50, preferably no more than 15:85 to 45:55, preferably no more than 20:80 to 40:60, a preferred range is no more than 23:77 to 38:62.

The additive may further comprise a hydrocarbon amine, a hydrocarbon polyamine, a hydrocarbon amidoamine, a hydrocarbon amidopolyamine, a hydrocarbon imidazoline, a hydrocarbon imidazo amine, a hydrocarbon imidazo polyamine, or a combination thereof.

In a second aspect, the invention relates to an asphalt composition comprising the additive as defined above and a bitumen composition comprising at least one of virgin bitumen, and/or bitumen from recycled bituminous material, preferably the recycled bituminous material selected from at least one of recycled asphalt shingles, recycled asphalt pavement and a combination thereof.

The asphalt composition may comprise the additive at a loading level of up to about 5 wt%, with a preferred range of at least 0.05%, more preferably at least 0.1 wt%, more preferably at least 0.2 wt%, and further preferably up to 0.5 wt%, relative to the total weight of asphalt in the asphalt composition.

The asphalt composition may comprise the bitumen from the recycled bituminous material in an amount of greater than about 5 wt%, preferably greater than about 10 wt%, preferably greater than about 15 wt%, preferably greater than about 20 wt%, preferably greater than about 25 wt%, preferably greater than about 30 wt%, preferably greater than about 40 wt%, preferably greater than about 50 wt%, preferably greater than about 60 wt%, preferably greater than about 70 wt%, preferably greater than about 80 wt%, preferably less than about 95 wt% or in the alternative in an amount of at least about 5 wt% to about 15 wt%, about 15 wt% to about 25 wt%, about 25 wt% to about 35 wt%, about 35 wt% to about 45 wt%, about 45 wt% to about 55 wt%, about 55 wt% to about 65 wt%, about 65 wt% to about 75 wt%, about 75 wt% to about 85 wt%, about 85 wt% to less than about 95 wt% or combinations thereof relative to the total weight of the asphalt composition.

The bitumen composition may comprise the virgin bitumen, the virgin bitumen selected from the group of , petroleum based asphalt, asphalt cement (AC), pitch, coal tar, asphalt, vacuum tower bottoms (VTB), asphalt residues, performance grade (PG) asphalts, flux, petroleum products, non-petroleum based products, polymer modified asphalt (PMA), or combinations thereof and/or the bitumen composition totally or partly in the form of an emulsion or a foam, preferably the virgin bitumen in the form of an emulsion or a foam.

The asphalt composition may further comprise an additional additive, preferably the additional additive selected from the group of a surfactant, a polyphosphoric acid, a polymer, a wax, a fluxant, an organic acid, an inorganic acid otherthan polyphosphoric acid, an ester of a fatty acid, a resin component, an oil from a vegetal or mineral source and derivatives thereof, an organic fiber, an inorganic fiber, a polymer and any combination thereof, more preferably the surfactant functions as an asphalt antistrip, more preferably the polyphosphoric acid comprises one selected from the group of pyrophosphoric acid, triphosphoric and metaphosphoric acids with phosphonic acid, pyrophosphates, and other similar compounds comprising at least one (OH-)P-O group and any combination thereof, more preferably the waxes comprises one selected from the group of Fischer-Tropsch waxes, functionalized waxes and any combination thereof, more preferably the resin component comprises one selected from the group of a rosin acid, a modified rosin acid, a tall oil pitch, a pine tar pitch, a pine rosin, a tall oil rosin, asphaltites, and any combinations thereof, more preferably the organic fiber comprises one selected from the group of cellulose fiber, cotton fiber, polypropylene fiber, polyester fiber, polyvinyl alcohol fiber, polyamide fiber and any combination thereof, more preferably the inorganic fiber comprises one selected from the group of glass fiber, metal fiber, a carbon fiber and any combination thereof, and more preferably the polymer comprises a polymer generally used in order to improve the mechanical performance of the bitumen and/or the mixture, still more preferably the polymer comprises one selected from the group of styrene/butadiene rubbers, styrene/butadiene block copolymers, ethylene/vinyl acetate copolymers, polyethylene, other alpha-polyolefins and any combination thereof.

In a third aspect, the invention relates to an asphalt mixture comprising the asphalt composition as defined above and aggregates, wherein the aggregates are chosen from the group of fresh aggregate, recycled aggregates, recycled asphalt pavement which is a recycled composition comprising aggregate and asphalt and any combination thereof, preferably the asphalt mixture comprises at least recycled aggregates, recycled asphalt pavement and any combination thereof.

The asphalt mixture may comprise the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt%, about 80 wt% to about 95 wt% based on the total weight of the aggregate present in the asphalt mixture or combinations thereof and/or the asphalt mixture comprises the recycled aggregate or aggregates from recycled asphalt pavement or any combination thereof in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

In a forth aspect, the invention relates to a preparation method of the asphalt mixture as defined above , wherein the additive, the bitumen and the aggregate are mixed, applied, compacted, and combinations thereof at a temperature of no more than about 180°C, preferably no more than about 150°C, more preferably no more than about 125°C, still more preferably no more than about 110°C.

### Brief description of the drawings

Figure 1 is a graph showing the impact of the additive according to the invention on rutting depth at 135 °C compared to comparative additives.
Figure 2 is a graph showing the impact of the additive according to the invention on rutting depth at 115 °C compared to comparative additives.
Other advantages and features will be apparent from the following description and from the claims.

### Detailed description of the invention

The devices and methods discussed herein are merely illustrative of specific manners in which to make and use this invention and are not to be interpreted as limiting in scope.

While the devices and methods have been described with a certain degree of particularity, it is to be noted that many modifications may be made in the details of the construction and the arrangement of the devices and components without departing from the spirit and scope of this disclosure. It is understood that the devices and methods are not limited to the embodiments set forth herein for purposes of exemplification.

Virgin bitumen means a bitumen which has not already been contacted with aggregates for the preparation of asphalt mixtures or has not already been formed into another product, e.g., an asphalt shingle with or without granules.

Fresh aggregate means aggregate which has not already been contacted with a bitumen or an asphalt composition for the preparation of asphalt mixtures.

An asphalt composition is a blend of a bitumen composition and the asphalt additive described herein.

A bitumen composition is a composition comprising at least one of virgin bitumen and/or bitumen from recycled bituminous material, preferably the recycled bituminous material selected from at least one of recycled asphalt shingles, recycled asphalt pavement and a combination thereof.

An asphalt mixture means a mixture of an asphalt composition and aggregates. Optionally the aggregate can be fresh aggregate, recycled aggregate or both.

The fresh aggregate typically is a mineral aggregate. Mineral aggregates are generally products from quarries, e.g., granite, limestones and combinations thereof. The aggregate is not limited granite or limestone, they are only exemplary.

Recycled aggregates are typically aggregates that are reclaimed from an asphalt mixture, aggregates present in recycled asphalt pavement, recycled concrete.

In general, in a first aspect, the invention relates to a paving composition (an asphalt mixture) that incorporates a high percentage of Recycled Asphalt Pavement (RAP) and/or Recycled Asphalt Shingle (RAS), preferably 30% or more, combined with an asphalt additive (also described herein as an "additive") relative to the total weight of the paving composition.

This additive may consist of a blend of an alkoxylate with a phosphate ester, provided that the alkoxylate and the phosphate ester are different.

The additive may have a weight ratio of phosphate ester / alkoxylate between no more than about 10:90 to about 50:50, preferably no more than about 15:85 to about 45:55, preferably no more than about 20:80 to about 40:60, a preferred range is no more than about 23:77 to about 38:62.

The alkoxylate may include ethoxylate units, propoxylate units, butoxylates units or combinations thereof. The degree of alkoxylation of the alkoxylate refers to the number of alkoxy groups, like ethylene oxide or propylene oxide added to a molecule during the alkoxylation process. The degree of alkoxylation may be at least about 3, preferably at least about 4, more preferably at least about 7, still more preferably at least about 10, even more preferably at least about 14, further preferably at least about 17, even further preferably at least about 20, still further preferably at least about 25 and up to about 100, more preferably up to about 75, still more preferably up to about 50. Preferably, the degree of alkoxylation of the alkoxylate is from 3 to 100, preferably from 4 to 80, more preferably from 4 to 70. For given embodiments suitable, degrees of alkoxylation may be from about 30 to70, from about 40 to 60, from about 45 to 55.

The paving composition may comprise the additive at a loading level of up to about 5 wt%, with a preferred range of at least 0.05wt%, preferably at least 0.1 wt%, more preferably at least 0.2 wt%, and further preferably up to 0.5 wt%, relative to the total asphalt content in the paving composition, including fresh aggregate and RAP and/or RAS and/or recycled aggregates. The additive may provide warm mix functionality, allowing the composition to be mixed and applied at cooler temperatures than a typical hot mix asphalt with no additive, although the additive is also suitable for hot mix applications.

The alkoxylate may be a random or block copolymer, which in turn may be at least a diblock, triblock, or tetrablock copolymer. Typical alkoxylate moieties may include ethylene oxide moieties, propylene oxide moieties, butylene oxide moieties, or a combination thereof.

The alkoxylate may have formula 1:

[A-O-B-]dZ (1)

wherein:
A is chosen from a hydrogen atom, a group G, a group 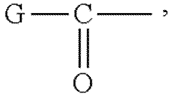
a group 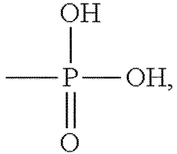 and a group 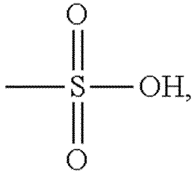
where G represents a linear or branched, saturated or unsaturated C1-C30 hydrocarbon-based chain optionally comprising at least one aromatic ring, and optionally substituted with at least one phosphate group, preferentially a single phosphate group,
B represents a divalent group containing at least one repeating unit of alkylene oxide type,
d is equal to 1 or to 2, and
Z is chosen from a hydrogen atom, a radical of formula Z1 and a radical of formula Z2: 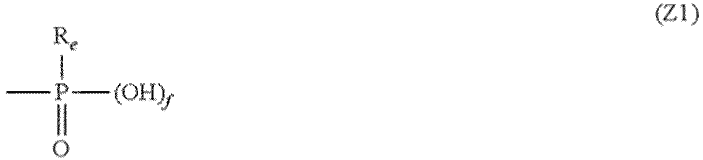 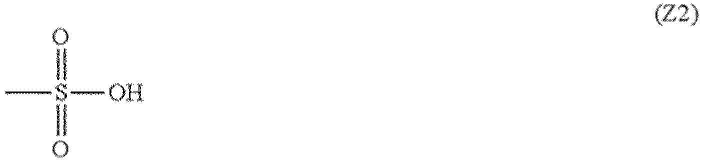
where R represents a hydrogen atom or a linear or branched C1-C6 alkyl group,
f is equal to 0, 1 or 2,
e is equal to 0 or to 1, and d+e+f is equal to 3,
a group G, and a group 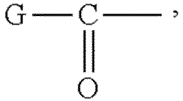
where G is as defined above,
it being understood that when d is equal to 1, then Z is chosen from a hydrogen atom, a radical of formula Z1, a radical of formula Z2, a group G, and a group 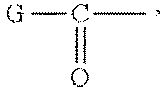
where G is as defined above,
and that when d is equal to 2, then Z represents Z1, e is equal to zero (0) and P is linked to two groups [A-O-B-] which may be identical or different, preferentially identical, as defined above.

Preferably, Z is a hydrogen atom or a group G, which is a linear or branched, saturated or unsaturated C1-C30 hydrocarbon-based chain optionally comprising at least one aromatic ring. More preferably, A and Z each represent hydrogen.

In the context of the present invention, the term "alkylene oxide" preferentially means butylene oxide (BO), propylene oxide (PO) or ethylene oxide (EO), it being understood that a "divalent group containing at least one repeating unit of alkylene oxide type" is a divalent group which may include one or more BO and/or PO and/or EO repeating units.

More preferentially, B represents a divalent group comprising repeating units of propylene oxide (PO) and/or ethylene oxide (EO) type, generally distributed randomly or in blocks, preferentially in blocks. Even more preferentially, B represents a block or random copolymer of ethylene oxide and propylene oxide comprising between about 3 and about 100 repeating units, with a mass ratio (ethylene oxide/copolymer) of between about 1 percent and about 70 percent.

Preferably, A denotes a hydrogen atom, B denotes a divalent group comprising repeating units of butylene oxide (BO), propylene oxide (PO) and/or ethylene oxide (EO) type, generally distributed randomly or in blocks, preferentially in blocks, d is equal to 1 and Z denotes a hydrogen atom.

Even more preferentially, A denotes a hydrogen atom, B represents a block, alternating or random copolymer comprising one or more ethylene oxide units and/or one or more propylene oxide units, and/or one or more butylene oxide units, and comprising a total of between about 3 and about 100 repeating units, d is equal to 1 and Z denotes a hydrogen atom.

Even more preferentially, A denotes a hydrogen atom, B represents a block, alternating or random copolymer comprising one or more ethylene oxide units and one or more propylene oxide units, and comprising a total of between about 3 and about 100 repeating units, d is equal to 1 and Z denotes a hydrogen atom.

The additive may comprise the alkoxylate in an amount of greater than 50 wt%, preferably greater than about 60 wt%, more preferably greater than about 70 wt%, and less than about 85 wt% based on the total weight of the additive. Preferably, the additive comprises from 50 to 85 wt%, more preferably from 60 to 85 wt%, and even more preferably from 65 to 85 wt% based on the total weight of the additive of the alkoxylate.

The additive may comprise less than or equal 50 wt%, preferably less than about 45 wt%, more preferably less than about 40 wt%, and greater than about 10 wt%, preferably greater than about 15 wt%, more preferably greater than about 20 wt%, still more preferably greater than about 25 wt%, still more preferably at least about 30 wt% based on the total weight of the additive. Preferably, the additive comprises from 10 to 50 wt%, more preferably from 15 to 45 wt%, and even more preferably from 20 to 40 wt% based on the total weight of the additive.

The phosphate ester may comprise at least one hydrocarbon chain having at least a 4 carbon chain, preferably at least about a 6 carbon chain, even more preferably more than about 7 carbon atoms, more preferably at least about an 8 carbon chain, still more preferably at least about a 12 carbon chain, and less than about a 30 carbon chain. The hydrocarbon chain may comprise a branched hydrocarbon chain. The phosphate ester may comprise a second, preferably a second and a third, hydrocarbon chain, wherein in the hydrocarbon chain is derived from the esterification of one or more alcohols, preferably 2-octanol, 2-ethylhexanol, methyl heptanol, dimethyl hexanol, isononanol, dimethyl heptanol, isodécanol, dimethyl octanol, trimethyl heptanol, isoundecanol, dimethyl nonanol, trimethyl octanol, isododecanol, trimethyl nonanol, tetramethyl octanol, isotridécanol, trimethyl decanol, tetramethyl nonanol, 4-methyl-2-pentanol, or is derived from the esterification of the above mentioned alcohols alkoxylated so that they include one or more alkoxylate moieties, more preferably up to about 100 alkoxylate units, still more preferably up to about 50 alkoxylate units, even more preferably up to about 20 alkoxylate units, further preferably the alkoxylate is chosen among ethylene oxide, propylene oxide, butylene oxide or a combination thereof, . The branching may be aliphatic or cyclical but not aromatic, and the number of carbon atoms may range from 1 to 10. The hydrocarbon chain comprising at least one branch moiety may include hetero atoms such as O, S, and/or P, and the branching may include hydroxyl units.

The additive may further comprise a hydrocarbon amine, a hydrocarbon polyamine, a hydrocarbon amidoamine, a hydrocarbon amidopolyamine a hydrocarbon imidazoline, a hydrocarbon imidazo amine, a hydrocarbon imidazo polyamine, , or a combination thereof. The hydrocarbon amine, which may be hydrocarbon polyamine, hydrocarbon amidoamine, hydrocarbon imidazoline, or combination thereof, may comprise greater than about 50wt%, preferably greater than about 55 wt%, more preferably at least about 60 wt%, more preferably at least about 70 wt%, more preferably at least about 75 wt%, more preferably at least about 80 wt%, and less than 90 wt% of the additive, if present.

The hydrocarbon amine may comprise at least one hydrocarbon chain having at least a 4 carbon chain, at least about 6 carbon chain, at least about 8 carbon chain, at least about 12 carbon chain, and less than about 30 carbon chain. The hydrocarbon chain may comprise a branched or a straight or a saturated or an unsaturated hydrocarbon chain.

An asphalt composition may comprise the additive as defined in any above embodiment and a bitumen composition comprising at least one of virgin bitumen, and/or a bitumen from the recycled bituminous material, preferably the recycled bituminous material selected from at least one of recycled asphalt shingles, recycled asphalt pavement and a combination thereof.

The additive may be combined with a bitumen composition comprising the bitumen from a recycled bituminous material to form an asphalt composition. The recycled bituminous material may comprise at least one of recycled asphalt pavement, recycled asphalt singles, or a combination thereof. The asphalt composition may comprise greater than about 5 wt%, preferably greater than about 10 wt%, preferably greater than about 15 wt%, preferably greater than about 20 wt%, preferably greater than about 25 wt%, preferably greater than about 30 wt%, preferably greater than about 40 wt%, preferably greater than about 50 wt%, preferably greater than about 60 wt%, preferably greater than about 70 wt%, preferably greater than about 80 wt%, preferably less than about 95 wt% of bitumen from the recycled bituminous material relative to the total weight of the asphalt composition. More preferably the bitumen from the recycled bituminous material is greater than about 10% and less than about 100%, preferably greater than about 10% and less than about 80%, still more preferably greater than about 10% and less than about 70%, even more preferably greater than about 20% and less than about 60%, relative to the total weight of the asphalt composition.

The bitumen composition may be in the form of an emulsion and/or an asphalt foam, may be one selected from the group of petroleum based asphalt, asphalt cement (AC), pitch, coal tar, asphalt, vacuum tower bottoms (VTB), asphalt residuel, performance grade (PG) asphalts, flux, petroleum products, non-petroleum based products, polymer modified asphalt and any combination thereof.

The asphalt composition may further comprise an additional additive of at least one of the following a surfactant, which may comprise an asphalt antistrip, a polyphosphoric acid, comprising all different existing grades and designations of polyphosphoric acids including pyrophosphoric acid, triphosphoric and metaphosphoric acids with phosphonic acid, pyrophosphates, and other similar compounds comprising at least one (OH-)P-O group, such as those described in WO 2008/148974, a polymer, generally used in order to improve the mechanical performance of the bitumen and the asphalt mix, waxes, such as Fischer-Tropsch waxes, e.g. described in U.S. Pat. No. 6,588,974, fluxants, organic or inorganic acids, esters of fatty acids and functionalized waxes, resin components, such as rosin acids, or modified rosin acids, tall oil pitch, pine tar pitch, pine rosins, tall oil rosins, asphaltites, e.g. Gilsonite^{®}, oils from vegetal or mineral sources and derivatives thereof, organic fibers (for example: cellulose, cotton, polypropylene, polyester, polyvinyl alcohol and polyamide fibers) and/or inorganic fibers (for example: glass, metal or carbon fibers), polymers generally used in order to improve the mechanical performance of the bitumen and the mixture, i.e. commonly used in the modification of bitumen are: styrene/butadiene rubbers, styrene/butadiene block copolymers, ethylene/vinyl acetate copolymers, polyethylene and other alpha-polyolefins, such as for example those disclosed in "Asphalt binder testing manual", Asphalt Institute 2007 and any combination thereof.

In a preferred embodiment, the asphalt composition comprises :
- an additive comprising an alkoxylate, preferably the alkoxylate comprises at least one of ethylene oxide moieties, propylene oxide moieties, butylene oxide moieties and combinations thereof, more preferably the degree of alkoxylation of the alkoxylate being from 3 to 100, and a phosphate ester, preferably the phosphate ester comprises at least one hydrocarbon chain having at least a 4 carbon atoms, more preferably having more than about 6 carbon atoms, even more preferably more than about 7 carbon atoms, more than about 8 carbon atoms, further preferably more than about 12 carbon atoms, even further preferably less than about 30 carbon atoms, preferably, the hydrocarbon chain has from 4 to 30 carbon atoms, more preferably from 6 to 20 carbon atoms, even more preferably from 8 to 20, and advantageously from 12 to 20 carbon atoms, preferably branched, the a weight ratio of phosphate ester / alkoxylate between no more than 10:90 to 50:50, preferably no more than 15:85 to 45:55, preferably no more than 20:80 to 40:60, a preferred range is no more than 23:77 to 38:62 and
- a bitumen composition comprising at least one of virgin bitumen and or bitumen from recycled bituminous material, preferably a bitumen composition comprising at least one bitumen from recycled bituminous material , preferably the bitumen from recycled bituminous material in an amount of 10 to 95 % based on the total weight of the asphalt composition, preferably from 15% to 95%, more preferably from 20 to 80, even more preferably from 30 to 70% based on the total weight of the asphalt composition.

An asphalt mixture comprises the asphalt composition as above and an aggregate, wherein the aggregate comprises one selected from the group of fresh aggregate, recycled aggregate, recycled asphalt pavement and any combination thereof,

The asphalt mixture may comprise fresh aggregate in an amount of at least 5 wt% up to about 90 wt%, and all points therebetween. The asphalt mixture may comprise the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt%, about 80 wt% to about 95 wt% based on the total weight of the aggregate present in the asphalt mixture or combinations thereof and/or the asphalt mixture comprises the recycled aggregate or aggregates from recycled asphalt pavement or any combination thereof in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

In a preferred embodiment, the asphalt mixture comprises :
- an additive comprising an alkoxylate, preferably the alkoxylate comprises at least one of ethylene oxide moieties, propylene oxide moieties, butylene oxide moieties and combinations thereof, more preferably the degree of alkoxylation of the alkoxylate being from 3 to 100, and a phosphate ester, preferably the phosphate ester comprises at least one hydrocarbon chain having at least a 4 carbon atoms, more preferably having more than about 6 carbon atoms, even more preferably more than about 7, more than about 8 carbon atoms, further preferably more than about 12 carbon atoms, even further preferably less than about 30 carbon atoms, preferably, the hydrocarbon chain has from 4 to 30 carbon atoms, more preferably from 6 to 20 carbon atoms, even more preferably from 8 to 20, and advantageously from 12 to 20 carbon atoms, preferably branched, the a weight ratio of phosphate ester / alkoxylate between no more than 10:90 to 50:50, preferably no more than 15:85 to 45:55, preferably no more than 20:80 to 40:60, a preferred range is no more than 23:77 to about 38:62 and and
- at least one of virgin bitumen and/or bitumen from recycled bituminous material , preferably virgin bitumen and bitumen from recycled bituminous material and
- from 10% to 90%, preferably from 20% to 80%, more preferably from 20% to 70%, even more preferably from 20 to 60% based on the total weight of the asphalt mixture of a recycled aggregate.

The invention also relates to a method of making the additive comprising the phosphate ester, the method comprising mixing the alkoxylate and the phosphate ester.

Regarding method of making the asphalt composition which includes recycled bituminous material, methods of incorporating the recycled bituminous material into the asphalt composition may include preheating the recycled bituminous material (generally above 100°C), without exceeding a certain limit in order to avoid smokes and further oxidation of the bitumen. An advantageous aspect of this method is that the recycled bituminous material is softened, and thus its incorporation and mixing together with the virgin bitumen and the asphalt additive is facilitated.

Another approach is introducing the recycled bituminous material at ambient temperature directly into a hot mixer (generally at a temperature of above 100°C), the mixer may contain fresh aggregate. The heating of the recycled bituminous material takes place and then the mixing with hot virgin bitumen composition may take place. The methods described in the present invention comprise the use of any of the asphalt mixture production techniques known in the art, for example those where the different components are directly mixed at the same or different temperatures, those where a bitumen composition is an emulsion or a foam may be used, as a total or partial replacement of the virgin bitumen, in the bitumen composition. Further the bitumen composition may include the additional additive in the form of an oil, the oil may also be in the form of an emulsion or a foam.

In one embodiment, the process of the present invention comprises the step of mixing at least one recycled bituminous material with optionally, but preferably, mineral aggregates, optionally virgin bitumen and the asphalt additive with or without one or more of the additional additive.

In another embodiment, the process of the present invention comprises the step of mixing at least one of the recycled bituminous material, optionally, but preferably, the mineral aggregates, the asphalt additive, optionally at least one of the additional additive, water, optionally with a breaking control additive, optionally, but preferably together with an emulsion of virgin bitumen. The breaking control additives are well known in the art, and generally refer to water solubilized-emulsifiers, and/or mineral salts that are able to delay the "breaking" of the emulsions of bitumen composition in contact with water and/or air and/or aggregates.

In one embodiment, when fresh aggregates are added in the process of the present invention, their amount preferably ranges from about 5 wt% to about 95 wt%, preferably from about 5 wt % to about 75%, more preferably from about 5 wt % to about 50 wt %, relatively to the total weight of the asphalt mixture.

The present invention also encompasses an asphalt mixture preparation method wherein the at asphalt additive is directly added to the at least one recycled bituminous material before the addition of fresh aggregates and virgin bitumen.

According to still another embodiment, the process of the present invention comprises the step of mixing at least one recycled bituminous material the asphalt additive, the fresh aggregates, optionally water, with foamed virgin bitumen comprising at least one additional additive.

According to this embodiment, one alternative consists in foaming the virgin bitumen containing the at least one asphalt additive with the injection of water and/or air, according to techniques well known by the skilled in the art. Another alternative consists in first preparing the foamed virgin bitumen and then adding the at least one asphalt additive to the foamed virgin bitumen.

In each of the above embodiments, the asphalt additive may be added in the pure state, or dissolved, dispersed or in the form of an emulsion, in another liquid. Suitable liquids for dissolving, dispersing or bringing into emulsion the asphalt additive, include water, organic solvents, such as for example alcohols, glycols, esters, fatty acids, ketones and the like. Especially suitable is water, particularly for the preparation of asphalt mixtures with bitumen compositions in the form of emulsions or foamed bitumen.

According to a preferred aspect of the present invention, the amount of the asphalt additive in the preparation of recycled bituminous material(s) containing-asphalt mixture generally ranges from 0.05 wt% to 5 wt% with respect to the total mass of asphalt composition present in the asphalt mixture, more preferably from 0.1 wt% to 2.5 wt%, and even more preferably from 0.1 wt% to 1 wt%.

Accordingto a preferred embodiment, the fraction of recycled bituminous material(s) ranges from about 5 wt% to about 95 wt% of the total mass of the asphalt mixture, more preferably from about 10 wt% to about 90 wt%, even more preferably from about 20 wt% to about 80 wt%, even more preferably from about 20 wt% to about 70 wt%, most preferably from about 20 wt% to about 60 wt%.

Applications of the asphalt mixtures disclosed herein include as a hot mix asphalt, as a warm mix asphalt or as a cold mix asphalt. The bitumen compositions for use in the aforementioned applications may be as an emulsion, a foam or in a neat form.

The asphalt composition may be capable of at least one of being mixed, applied, compacted, and combinations thereof at a temperature of no more than 180°C, preferably no more than 150°C, more preferably no more than 125°C, still more preferably no more than 110°C. While capable of being mixed, applied, and compacted at such warm mix temperatures, the asphalt composition may additionally be suitable for use at higher temperature.

The asphalt mixture may be prepared as follow : the additive, the bitumen and the aggregate are mixed, applied, compacted, and combinations thereof at a temperature of no more than about 180°C, preferably no more than about 150°C, more preferably no more than about 125°C, still more preferably no more than about 110°C.

The technical advantages of this innovative paving composition may include significantly enhanced rutting resistance compared to conventional asphalt mixtures with similar RAP content. Specifically, the composition may offer superior workability, requiring less energy for compaction at typical warm or hot mix temperatures, and may be particularly effective in hot asphalt mixes. The invention may be applicable for a range of uses, including construction and maintenance of roads, highways, sidewalks, parking lots, airport runways, and other rolling surfaces.

By enabling the use of higher amounts of recycled bituminous materials, such as RAP or Recycled Asphalt Shingles (RAS), while reducing the need for fresh bitumen, this invention may contribute to more sustainable and durable paving solutions.

Unlike prior methods, this invention focuses on increasing the utilization of Recycled Asphalt Pavement (RAP) and/or Recycled Asphalt Shingles (RAS) without sacrificing mechanical properties. By using an additive containing an alkoxylate blend (e.g., ethoxylates and propoxylates) combined with a phosphate ester, the invention may not only improve workability and compaction at lower temperatures but also reduce the amount of fresh binder required. This additive system may facilitate the efficient mixing and bonding of recycled materials, which is essential in modern, environmentally friendly asphalt production.

A significant improvement over existing methods is the ability of this invention to enhance adhesion promotion and anti-stripping properties in asphalt mixtures. The additive may improve the binder-aggregate interaction, providing better mechanical performance and moisture resistance. The innovation lies in leveraging the synergistic effects of the additive components to optimize both the internal structure and the mechanical properties of the mix. This may allow for higher RAP or RAS content, reducing reliance on virgin or fresh materials and contributing to more sustainable construction practices.

In summary, this invention surpasses prior art by introducing a novel mechanism for improving the internal structure of asphalt mixtures through specialized additives, leading to better mechanical properties, enhanced rutting resistance, and improved sustainability by maximizing the use of recycled materials.

During testing, various additives were studied to explore the efficacy of EO/PO-based additives combined with phosphate esters in improving the performance of recycled asphalt mixtures. By optimizing the ratios of these additives, significant improvements were observed in the rutting resistance at lower production temperatures, particularly in conditions that typically challenge the compaction and adhesion properties of asphalt mixtures. The findings highlight the potential of these additives to enhance the sustainability and performance of asphalt pavements by facilitating the increased use of recycled materials without compromising quality.

The integration of recycled asphalt materials such as Recycled Asphalt Pavement (RAP) and Recycled Asphalt Shingles (RAS) into new asphalt mixtures is a critical component of sustainable pavement construction. However, achieving high-performance characteristics, such as resistance to rutting and moisture damage, while incorporating a high percentage of recycled materials presents a significant challenge. Traditional methods often require elevated production temperatures and extensive use of virgin bitumen, leading to increased energy consumption and environmental impact.

### Examples:

This study investigated the use of EO/PO-based additives, combined with phosphate esters, to overcome these challenges. The research focused on the impact of these additives on the mechanical properties of asphalt mixtures, particularly in terms of rutting resistance at lower production temperatures

### Materials and Methods

Materials:

Three different types of additives were tested and one sample without an additive:
- Sample A: without additive
- Sample B additive according to the invention, which contains 30 wt% 2-EthylHexyl-phosphate-ester and 70 wt% of alkoxylate, which is a triblock copolymer composed of 8 EO - 50 PO - 8EO, with a weight ratio of phosphate ester / alkoxylate : 30:70.
- Sample C comparative additive, which is a mixture of 25-30 wt% of 2-EthylHexyl-phosphate-ester and of 70-75 wt% Tall oil fatty acid
- Sample D with a comparative additive : 3-[dimethoxy(2-hydroxyethoxy) silyl] propyloctadecyldimethyl ammonium chloride

Asphalt mixture composition comprises 40% RAP, 3.9% virgin asphalt binder (PG 64-22), 56.1% virgin granite aggregate based on total weight of the mixture. The RAP contains 5,2% of aged asphalt. Additive is added as 0.5% by weight of total binder (i.e. binder in virgin +binder in RAP).

Asphalt mixtures were prepared by mixing at 146°C, and compacted at 135°C or 115°C.

Phosphate Ester combined with EO/PO was evaluated to enhance aggregate packing and rutting resistance of asphalt mixtures.

The control A corresponds to an asphalt mixture prepared without additive.

### Experimental Methods:

Hamburg Wheel Tracking Test (HWT): Conducted followingAASHTO T 324 to evaluate rutting resistance at lower production temperatures. Four cylindrical specimens were submerged in a water bath at 50°C and subjected to repeated loading. Specimen were prepared according to the standard AASHTO T 312.

Results and Discussion: Impact of EO/PO and Phosphate Ester on Rutting Resistance

The results from the Hamburg Wheel Tracking Test revealed that the combination of EO/PO and phosphate ester significantly reduced rut depth in asphalt mixtures, particularly at lower production temperatures compared to other chemistries without using the block copolymers.

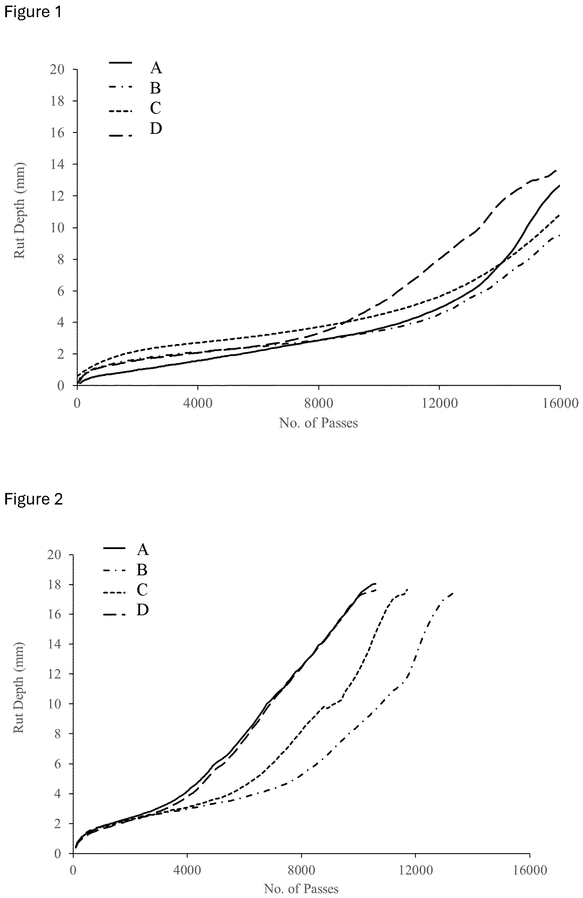

The data presented in Figures 1 and 2 emphasize the importance of selecting the right additive when transitioning to Warm Mix Asphalt technologies, particularly in high-RAP mixtures: 40 wt%. Control shows the results for a specimen prepared without additive. The superior performance of EO/PO and phosphate ester (i.e. sample B) at reduced temperatures underscores its value in enhancing the sustainability and durability of asphalt pavements, making it a key component in advancing environmentally friendly construction practices. Sample B stands out as the most effective additive in maintaining rutting resistance at WMA temperatures, closely aligning its performance with HMA conditions. This highlights its potential as a preferred solution for sustainable asphalt production, allowing for reduced temperatures without compromising mixture durability. The findings support the strategic use of specific additives, such as Sample B, to optimize the performance of high-RAP mixtures at lower production temperatures, contributing to energy savings, lower emissions, and improved pavement longevity.

Whereas, the devices and methods have been described in relation to the drawings and claims, it should be understood that other and further modifications, apart from those shown or suggested herein, may be made within the spirit and scope of this invention.

## Claims

1. An asphalt additive comprising at least:
- an alkoxylate, preferably the alkoxylate comprises at least one of ethylene oxide moieties, propylene oxide moieties, butylene oxide moieties and combinations thereof, more preferably the alkoxylate comprises a copolymer, preferably the copolymer comprises either a random or a block copolymer, more preferably the block copolymer comprises at least one of a diblock, triblock or tetrablock copolymer; and
- a phosphate ester, preferably the phosphate ester comprises at least one hydrocarbon chain having at least a 4 carbon atoms, more preferably having more than about 6 carbon atoms, even more preferably more than about 7 carbon atoms, even more preferably more than about 8 carbon atoms, further preferably more than about 12 carbon atoms, even further preferably less than about 30 carbon atoms, preferably, the hydrocarbon chain has from 4 to 30 carbon atoms, more preferably from 6 to 20 carbon atoms, even more preferably from 8 to 20, and advantageously from 12 to 20 carbon atoms.

2. The additive according to claim 1, wherein the degree of alkoxylation of the alkoxylate is from 3 to 100, preferably from 4 to 75, more preferably from 4 to 50.

3. The additive according to claim 1 or 2, wherein the alkoxylate is of formula 1:
[A-O-B-]_{d}Z (1)
wherein:
A is chosen from a hydrogen atom, a group G, a group 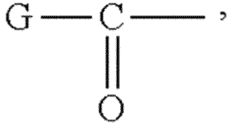
a group 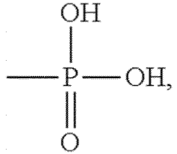 and a group 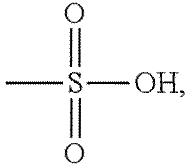 where G represents a linear or branched, saturated or unsaturated C₁-C₃₀ hydrocarbon-based chain optionally comprising at least one aromatic ring, and optionally substituted with at least one phosphate group, preferentially a single phosphate group,
B represents a divalent group containing at least one repeating unit of alkylene oxide type,
d is equal to 1 or to 2, and
Z is chosen from a hydrogen atom, a radical of formula Z1 and a radical of formula Z2: 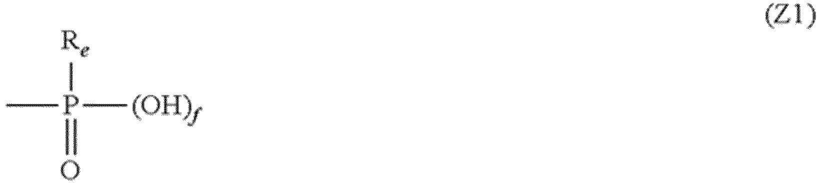 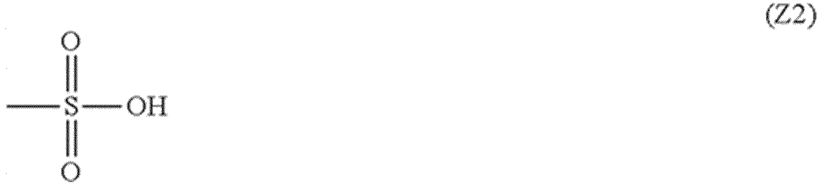
where R represents a hydrogen atom or a linear or branched C₁-C₆ alkyl group,
f is equal to 0, 1 or 2,
e is equal to 0 or to 1, and d+e+f is equal to 3,
a group G, and a group 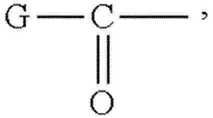
where G is as defined above,
it being understood that when d is equal to 1, then Z is chosen from a hydrogen atom, a
radical of formula Z1, a radical of formula Z2, a group G, and a group 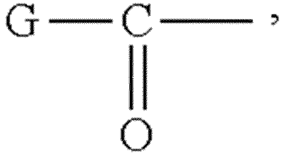
where G is as defined above,
and that when d is equal to 2, then Z represents Z1, e is equal to zero (0) and P is linked to two groups [A-O-B-] which may be identical or different, preferentially identical, as defined above, preferably, A and Z each represent hydrogen.

4. The additive according to any one of the preceding claims, wherein it comprises the alkoxylate in an amount of greater than 50 wt%, preferably greater than about 60 wt%, more preferably greater than about 70 wt%, and less than about 85 wt% based on the total weight of the additive, preferably, the additive comprises from 50 to 85 wt%, more preferably from 60 to 85 wt%, and even more preferably from 65 to 85 wt% based on the total weight of the additive.

5. The additive according to any one of the preceding claims, wherein the phosphate ester comprises two hydrocarbon chains and optionally three hydrocarbon chains, preferably either or both of the 2^{nd} chain and the 3^{rd} chain when present, comprises at least a 4 carbon atom chain, more preferably the carbon chain having more than about 6 carbon atoms, even more preferably more than about 7 carbon atoms, even more preferably the carbon chain having more than about 8 carbon atoms, further preferably the carbon chain having more than about 12 carbon atoms, even further preferably the carbon chain having less than about 30 carbon atoms, and/or preferably wherein at least one of the 1^{st} chain, the 2^{nd} chain, the optional 3^{rd} chain and any combination thereof includes one or more alkoxylate moieties, more preferably up to about 100 alkoxylate units, still more preferably up to about 50 alkoxylate units, even more preferably up to about 20 alkoxylate units, further preferably the alkoxylate is chosen among ethylene oxide, propylene oxide, butylene oxide or a combination thereof.

6. The additive according to any one of the preceding claims, wherein at least one hydrocarbon chain of the phosphate ester comprises at least one or more branched groups, preferably each branched group comprises an aliphatic or cyclical moiety comprising at least one carbon atom up to about 13 carbon atoms, more preferably the aliphatic or cyclical moiety comprises at least one of an alkyl group, alkenyl group, alkynyl group and any combination thereof, still more preferably the branch group devoid of an aromatic group, even more preferably the hydrocarbon chain comprising at least one branched group derived from the esterification of one or more alcohols chosen from among of 2-octanol, 2-ethylhexanol, methyl heptanol, dimethyl hexanol, isononanol, dimethyl heptanol, isodécanol, dimethyl octanol, trimethyl heptanol, isoundecanol, dimethyl nonanol, trimethyl octanol, isododecanol, trimethyl nonanol, tetramethyl octanol, isotridécanol, trimethyl decanol, tetramethyl nonanol, 4-methyl-2-pentanol, or derived from the esterification of the above mentioned alcohols alkoxylated so that they include one or more alkoxylate moieties, more preferably up to about 100 alkoxylate units, still more preferably up to about 50 alkoxylate units, even more preferably up to about 20 alkoxylate units, further preferably the alkoxylate is chosen among ethylene oxide, propylene oxide, butylene oxide or a combination thereof, further preferably at least one of the branched group includes at least one hetero atom, wherein the hetero atom comprises at least one of O, S, P and combinations thereof and/or 1 or more hydroxyl groups.

7. The additive according to any one of the preceding claims, wherein it comprises the phosphate ester in an amount of less than 50 wt%, preferably less than about 45 wt%, more preferably less than about 40 wt%, and greater than about 10 wt%, preferably greater than about 15 wt%, more preferably greater than about 20 wt%, still more preferably greater than about 25 wt%, still more preferably at least about 30 wt% based on the total weight of the additive, preferably, the additive comprises the phosphate ester in an amount from 10 to 50 wt%, more preferably from 15 to 45 wt%, and even more preferably from 20 to 40 wt% based on the total weight of the additive.

8. The additive of any one of the preceding claims, wherein it has a weight ratio of phosphate ester / alkoxylate between no more than 10:90 to 50:50, preferably no more than 15:85 to 45:55, preferably no more than 20:80 to 40:60.

9. The additive of any one of the preceding claims, wherein it further comprises a hydrocarbon amine, a hydrocarbon polyamine, a hydrocarbon amidoamine, a hydrocarbon amido polyamine a hydrocarbon imidazoline, a hydrocarbon imidazo amine, a hydrocarbon imidazo polyamine or a combination thereof.

10. An asphalt composition comprising:
- the additive as defined in any one of the preceding claims 1 to 9; and
- a bitumen composition comprising at least one of virgin bitumen, and/or recycled bituminous material, preferably the recycled bituminous material selected from at least one of recycled asphalt shingles, recycled asphalt binder and a combination thereof.

11. The asphalt composition of claim 10, wherein it comprises the additive at a loading level of up to 5 wt%, with a preferred range of at least 0.05%, more preferably at least 0.1 wt%, more preferably at least 0.2 wt%, further preferably up to 2.5wt% and even further preferably up 1 wt%, relative to the total weight of asphalt in the asphalt composition.

12. The asphalt composition of Claim 10 or 11, wherein the asphalt composition comprises the recycled bituminous material in an amount of greater than about 5 wt%, preferably greater than about 10 wt%, preferably greater than about 15 wt%, preferably greater than about 20 wt%, preferably greater than about 25 wt%, preferably greater than about 30 wt%, preferably greater than about 40 wt%, preferably greater than about 50 wt%, preferably greater than about 60 wt%, preferably greater than about 70 wt%, preferably greater than about 80 wt%, preferably greater than about 90 wt% or in the alternative in an amount of at least about 5 wt% to about 15 wt%, about 15 wt% to about 25 wt%, about 25 wt% to about 35 wt%, about 35 wt% to about 45 wt%, about 45 wt% to about 55 wt%, about 55 wt% to about 65 wt%, about 65 wt% to about 75 wt%, about 75 wt% to about 85 wt%, about 85 wt% to less than about 95 wt% of the total mass of asphalt mixture or combinations thereof.

13. The asphalt composition of any one of the preceding claims 10 to 12, wherein the bitumen composition comprises the virgin bitumen, the virgin bitumen selected from the group of , petroleum based asphalt, asphalt cement (AC), pitch, coal tar, asphalt, vacuum tower bottoms (VTB), asphalt residual, performance grade (PG) asphalts, flux, petroleum products, non-petroleum based products, polymer modified asphalt (PMA), or combinations thereof and/or the bitumen composition totally or partly in the form of an emulsion or a foam, preferably the virgin bitumen in the form of an emulsion or a foam.

14. The asphalt composition of any one of the preceding claims 10 to 13, wherein the asphalt composition further comprises an additional additive , preferably the additional additive selected from the group of a surfactant, a polyphosphoric acid, a polymer, a wax, a fluxant, an organic acid, an inorganic acid other than polyphosphoric acid, an ester of a fatty acid, a resin component, an oil from a vegetal or mineral source and derivatives thereof, an organic fiber, an inorganic fiber, a polymer and any combination thereof, more preferably the surfactant functions as an asphalt antistrip, more preferably the polyphosphoric acid comprises one selected from the group of pyrophosphoric acid, triphosphoric and metaphosphoric acids with phosphonic acid, pyrophosphates, and other similar compounds comprising at least one (OH-)P-O group and any combination thereof, more preferably the waxes comprises one selected from the group of Fischer-Tropsch waxes, functionalized waxes and any combination thereof, more preferably the resin component comprises one selected from the group of a rosin acid, a modified rosin acid, a tall oil pitch, a pine tar pitch, a pine rosin, a tall oil rosin, asphaltites, and any combinations thereof, more preferably the organic fiber comprises one selected from the group of cellulose fiber, cotton fiber, polypropylene fiber, polyester fiber, polyvinyl alcohol fiber, polyamide fiber and any combination thereof, more preferably the inorganic fiber comprises one selected from the group of glass fiber, metal fiber, a carbon fiber and any combination thereof, and more preferably the polymer comprises a polymer generally used in order to improve the mechanical performance of the bitumen and/or the mixture, still more preferably the polymer comprises one selected from the group of styrene/butadiene rubbers, styrene/butadiene block copolymers, ethylene/vinyl acetate copolymers, polyethylene, other alpha-polyolefins and any combination thereof.

15. An asphalt mixture comprising the asphalt composition of any one of the preceding claims 10 to 14 and an aggregate, wherein the aggregates are chosen from the group of fresh aggregate, recycled aggregates, recycled asphalt pavement and any combination thereof, preferably the asphalt mixture comprises at least recycled aggregates, recycled asphalt pavement and any combinations thereof.

16. The asphalt mixture of Claim 15 where the asphalt mixture comprises the fresh aggregate in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 90 wt%, about 80 wt% to about 95 wt% based on the total weight of the aggregate present in the asphalt mixture or combinations thereof and/or the asphalt mixture comprises the recycled aggregate and/or the recycled asphalt pavement in an amount of at least about 5 wt% to about 20 wt%, about 20 wt% to about 30 wt%, about 30 wt% to about 40 wt%, about 40 wt% to about 50 wt%, about 50 wt% to about 60 wt%, about 60 wt% to about 70 wt%, about 70 wt% to about 80 wt%, about 80 wt% to about 95 wt% based on the total weight of the aggregate present in the asphalt mixture, or combinations thereof.

17. A preparation method of the asphalt mixture defined in any one of the preceding claims 15 or 16, wherein the additive, the bitumen and the aggregate are mixed, applied, compacted, and combinations thereof at a temperature of no more than about 180°C, preferably no more than about 150°C, more preferably no more than about 125°C, still more preferably no more than about 110°C.
